(19) Europäisches Patentamt
European Patent Office
Office européen des brevets

(11) **EP 2 514 524 A1**

## (12) EUROPEAN PATENT APPLICATION

(43) Date of publication:
**24.10.2012 Bulletin 2012/43**

(21) Application number: **11163463.0**

(22) Date of filing: **21.04.2011**

(51) Int Cl.:
*B01J 21/18* (2006.01)    *B01J 23/04* (2006.01)
*B01J 23/22* (2006.01)    *B01J 23/34* (2006.01)
*B01J 23/75* (2006.01)    *B01J 23/755* (2006.01)
*B01J 23/28* (2006.01)    *B01J 23/30* (2006.01)
*B01J 37/02* (2006.01)    *B01J 35/10* (2006.01)
*C10G 45/06* (2006.01)    *C10L 3/10* (2006.01)
*C01B 17/04* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Research Institute of Petroleum Industry (RIPI)**
**18799 Tehran (IR)**

(72) Inventors:
• **Ali, Mohamadalizadeh**
  **Tehran (IR)**
• **Rashidi, Alimorad**
  **Tehran (IR)**

• **Jafar, Towfighi**
  **14637-17813, Tehran (IR)**
• **Mohajeri, Ali**
  **Tehran (IR)**
• **Rezapour, Morteza**
  **1441993994, Tehran (IR)**
• **Jafarijozani, Kheirollah**
  **31559-77666, Azimih Karaj (IR)**
• **Vahidi, Mehdi**
  **1481786684, Tehran (IR)**

(74) Representative: **Hrovat, Andrea Darinka**
**FUCHS Patentanwälte**
**Westhafenplatz 1**
**60327 Frankfurt am Main (DE)**

(54) **Nanocatalyst and process for removing sulfur compounds from hydrocarbons**

(57)    The invention relates to catalyst systems and processes used for the removal of sulfur compounds from hydrocarbonous gas streams. The invention more specifically relates to catalyst systems based on nano-materials and processes for their production. The invention also relates to catalyst systems and processes used for removal of sulfur materials from gaseous hydrocarbonous streams. The objects of the present invention are achieved by developing new catalyst systems based on nano-structured carbon materials from the group consisting of single wall carbon nano-tubes, double wall carbon nano-tubes, multi wall carbon nano-tubes, nanoporous carbon, carbon nano-fibers, or mixtures thereof as support material and metals and metal compounds selected from Na, V, Mn, Co, Ni, Mo, Cd, W as catalytic substances.

Fig. 2: The process system of the present invention: First reactor (100) for converting mercaptans (if present) to $H_2S$ and second reactor (140) for converting $H_2S$ to elemental sulfur.

**Description**

**Field of invention**

The invention relates to catalyst systems and processes used for the removal of sulfur compounds from hydrocarbonous gas streams. The invention more specifically relates to catalyst systems based on nano-materials and processes for their production. The invention also relates to catalyst systems and processes used for removal of sulfur materials from gaseous hydrocarbonous streams.

**Prior art**

Crude natural gas is produced through one of the sources of gas wells, crude oil wells and condensate wells. In the first step of purifying the produced natural gas, $H_2S$ which is a very poisonous and corrosive impurity is removed from the natural gas streams.

Gas refineries generally utilize several processes for the removal of acid gases, each of which suffering some inherent limitations. In general purification of natural gases includes three steps:

During the first step acid gases are removed commonly through the application of amine solutions.

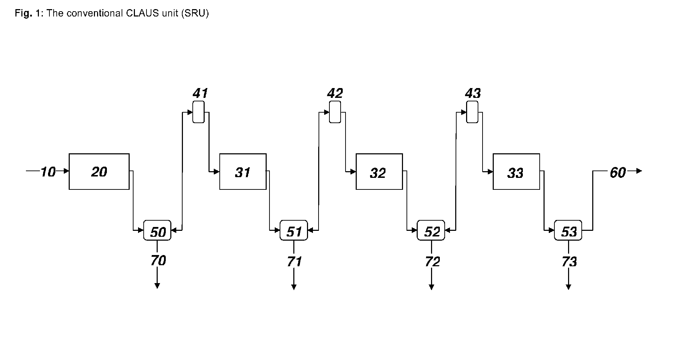

The acid gas removed during the first step is sent in a second step to the sulfur recovery unit (SRU) (see **Fig. 1**), where the $H_2S$ content is combusted to yield elemental sulfur in a so-called CLAUS process.

After that the gas stream leaving the CLAUS process is sent in a third step to the tail gas treating unit (TGTU) and the residue of the TGTU is sent to an incinerator flue gas stack.

In other stages compounds like water vapor (through methods like pressure swing absorption and reaction with triethylene glycol (TEG)), mercury (through the application of molecular sieves or activated carbon) and nitrogen (through processes like adsorption and absorption or cryogenic processes) are removed from gas streams that are already striped of acid compounds.

Among these processes, the sulfur recovery unit, also called "CLAUS unit", is very common for removal of high concentrations of $H_2S$ and its conversion to elemental sulfur. $H_2S$ is generally sent to the CLAUS unit from physicochemical refining units (Selexol, Pectisol, Purisol, Amine) and refineries, natural gas processing plants, and gasification or synthesis plants.

The CLAUS unit consists of a thermal and a catalytic section. In the thermal section, $H_2S$ is reacted with stoichiometric amounts of air or air/oxygen mixtures and heated, due to which 1/3 of $H_2S$ is combusted through the very exothermic reaction of

$$H_2S + 3/2\ O_2 \rightarrow SO_2 + H_2O \qquad \textbf{Eq. 1}$$

A fraction of the $H_2S$ reacts with a fraction of $SO_2$ formed during the reaction to yield elemental sulfur and water vapor according to the exothermic reaction below:

$$2\ H_2S + SO_2 \ \rightleftarrows 3/x\ S^0_x + 2\ H_2O \qquad \textbf{Eq. 2}$$

After the thermal section, the outlet gas is cooled and the elemental sulfur is condensed to a molten stream and is hence separated from the gas stream.

The gas next enters the catalytic section comprising a series of catalytic reactors (**Fig. 1**).

In the classical CLAUS process, all the mentioned steps are always required to avoid the corrosion of the apparatus at the high temperatures of the process which leads to complications during the process.

The major steps of the catalytic section are:

1. Heating

2. Catalytic reaction

3. Cooling and condensation

These steps are normally repeated for 3 times (in the presence of TGTU the number of the steps is reduced to 2).

Normally, the temperature of the first reaction step is about 315°C to 330°C. It should be noted that the catalytic reaction happens better at lower temperatures, but the temperature should at least exceed the dew point of sulfur. The temperatures for the steps 2 and 3 of the catalytic section are 240°C and 200°C respectively.

Alumina is among the most common supports used in the catalysts for converting $H_2S$ to elemental sulfur. The superiority of alumina is in part due to its capability of leading to catalysts with very good distribution of active metals. The oxides of the active metals and alumina undergo many interactions through the transition state and a lot of the particles formed on the support are very stable and may not be converted to sulfides thereof. This adversely affects the activity of the catalyst. The interactions between the active metal and the support also have negative effects on the activities of such catalysts. In some catalysts Fe/Co/Ni are also used in amounts of 0.5 to 5 % by weight in addition to $TiO_2$ and $Al_2O_3$.

Factors like the flow rate and reaction temperature affect the reaction rate strongly. The catalytic section converts about 90 to 98 percent of the $H_2S$ content of the feed to elemental sulfur. To eliminate the remaining $H_2S$ content complementary processes like the liquid redox process are also used.

In general the CLAUS reaction takes place at a temperature range of from 200°C to 330°C in at least three catalyst beds and the reactor's temperature should always be higher than the melting point of sulfur to facilitate escape of sulfur out of the reactor. The presence of two thermal and a catalytic bed in this process makes it very energy intensive. The higher temperature, on the other hand, also leads to the displacement of the exothermic equilibrium of the CLAUS reaction toward the reactants, which is not desirable at all. The higher the thermal conductivity of the catalyst is, the less will be the chance of formation of undesirable hotspots on the catalyst bed. This is a common problem when conventional CLAUS catalysts are used, especially those based on alumina.

Such catalysts, even those based on alumina nano-particles also possess the disadvantage of low surface areas with the result that their active sites are covered easily by solid sulfur particles and thus are deactivated during the process. Hence systems using these substances as catalysts should operate at temperatures higher than the dew point of sulfur.

In the case of using these catalysts it is also not possible to remove the water and sulfur content at the same time.

The mercaptan content of gas resources, on the other hand is usually removed using one of a plurality of methods including oxidation of mercaptans, physical extraction, decomposition to other sulfur containing compounds, adsorption over a stationery bed, etc.

In the case of converting mercaptans to other compounds, especially to $H_2S$, the temperature should be over 300°C and the pressure should exceed 15 bars. On the other hand, if high-scale absorption of mercaptans is of desire, high amounts of sweet gas should be passed over the catalytic bed to reduce the catalytic bed, and the exiting gas containing mercaptans has to be burnt, which leads to loss of large quantities of sweet gas and energy.

The use of large amounts of solvents for extraction and production of disulfides are other disadvantages of the other common mercaptan removal methods.

US 2005/0123470 A1 uses alumina and clay as catalyst support loaded with iron oxide and discloses that in case the amount of the loaded item is less than 5% by weight, the desulfurization performance of the catalyst is low.

Furthermore, the application of the catalyst in the CLAUS process leads to rather low yields, most probably due to the low conductivity of the catalyst support that is used in the temperature range of from 200 to 350°C, suppressing the chemical equilibrium of the CLAUS reaction to the left side of **Eq. 2.**

Another disadvantage of the catalysts based on alumina as support material is their inability to work in the presence of water. In this case a layer of water is formed on the rather hydrophilic support material which leads to low yields for converting $H_2S$ to elemental sulfur as well as to hindered mass-transfer in the catalytic bed.

On the other hand the catalyst needs regeneration after stoichiometric amounts of $H_2S$ are passed through which brings about high operating costs.

US 5,256,384 discloses a catalyst based on active carbon to convert $H_2S$ to elemental sulfur in the CLAUS reaction. The catalyst contains 1 - 5 % by weight of Fe, Co or Ni. Although it works well at temperatures lower than the melting point of sulfur, the catalyst cannot be used for the desulfurization of feeds containing more than 1000 ppm of $H_2S$ and hence it can be used only in CLAUS tail gas system.

This means that most of the $H_2S$ should be eliminated initially in a first step using $Al_2O_3$ or $TiO_2$ loaded with 0.5 to 5% by weight of Fe, Co and/or Ni before next the active carbon catalysts can be used.

It should be also noted that due to the size distribution of the active carbon pores in the range of micro-pore sizes and due to the rather high surface area, the small size of the pores decreases the accessibility of the catalytic sites and increases the mass transfer resistance. Although the catalyst works well below the melting point of solid sulfur, solid sulfur particles can lead to the clogging of pores of the support material. US 7226572 B1 discloses a new process for converting $H_2S$ to elemental sulfur, using several thermal and catalytic beds similar to those of the CLAUS reaction.

Each bed has an identical role to those of the CLAUS process. The process majorly intends to optimize the operating conditions and does not introduce any methods for the removal of $H_2O$ and mercaptans.

Due to the presence of thermal and catalytic steps similar to that of the CLAUS process the major shortcoming of the process is the high operating temperatures of 200 to 350°C needed to separate sulfur in molten form.

As a result, in the conventional sweetening processes, including that of the above document, $H_2S$, mercaptans, and water vapor should be separately and independently removed from the gas stream, requiring rather complicated and rather cost-intensive processes.

**Purpose of invention**

It was the purpose of the present invention to provide new catalyst systems used for elimination of sulfur compounds from hydrocarbonous gas streams which do not share the disadvantages of those known from prior art.

It was also the purpose of the present invention to develop a process of sulfur elimination from hydrocarbons which makes it possible to merge mercaptan removal with $H_2S$ removal on the one hand and removal of elemental sulfur and water during the process on the other hand with the objective to reduce process complexity and this way also process costs.

The objects of the present invention are achieved by developing new catalyst systems based on nano-structured carbon materials as support material and selected metals and metal compounds as catalytic substances as disclosed in the claims.

**Improvements vis-à-vis prior art processes**

The new catalyst systems possess a number of advantages:

1. They allow operations under mild conditions. "Mild conditions" means in this context that lower process temperatures compared to processes known from the prior art are necessary for reaching high yields of desulfurization. Lower temperatures prevent displacement of the CLAUS reaction to the left side of the reaction equation 2 **(Eq. 2)** leading to low $H_2S$ removal yields.

2. They allow higher rates of collision of the reactants due to enhanced interactions between the catalytic metal and its support material which enables a better support structure and an optimized support geometry.

3. Catalyst systems of the present invention comprise a single metal or a single metal compound. This simplifies the whole system compared to those concepts which deal with use of different metallic promoters in the catalyst system, e.g. Fe/Co/Ni systems.

4. Another advantage of the catalyst systems of the present invention is the fact that they do not attract the solid sulfur particles due to the nature and the properties of the support material, facilitating the exit of solid sulfur particles, as well as eliminating the necessity of using high temperatures. This increases the $H_2S \rightarrow S$ conversion yield and the catalyst lifetime. At the same time it is not necessary any more to increase the GHSV (gas hourly space velocity) and decrease the pressure what is commonly done to reduce the reactor corrosion rate.

5. Besides the catalyst systems of the present invention are able to work well in presence of water in the reaction zone. This leads to the ability to merge the demoisturizing and $H_2S$ removal units.

**Composition of catalyst system**

The catalyst systems of the present invention comprise a single catalytic substance deposited on a support material. Catalyst systems of the present invention are able for converting mercaptans to $H_2S$ which are present in gas streams in an amount of from 10 to 10000ppm.

In a preferred embodiment of the invention the catalysts of the present invention are able to convert mercaptans into $H_2S$ with a yield of at least 99%

They are also able to remove $H_2S$ from gas streams when $H_2S$ is present therein in an amount of from 10 to 20000ppm. In a mostly preferred embodiment the yield of removal has a value of at least 99%.

A "substance" in the context of the present invention is either a single element or a single chemical compound.

In contrast, a "support material" in the context of the present invention can comprise one or more substances. A "support material" in the context of the present invention can be e. g. a mixture of different chemical compounds, a mixture of one or more chemical elements and one or more chemical compounds, a mixture of different modifications of a single element, etc.

In the context of the present invention a "catalytic substance" is a substance which "catalyzes" a chemical reaction. "Catalyzing" a chemical reaction means enabling the reaction to run under milder conditions than necessary when no catalytic substance being present in the system. "Milder conditions" means in this context that lower temperature and/ or lower pressure is necessary to run a process in presence of a catalytic substance than it is the case in absence of the catalytic substance. Although catalytic substances participate in chemical reactions they are not converted to reaction products themselves.

In a preferred embodiment of the invention the catalyst system comprises a single catalytic substance and support material consisting of a single substance.

In the context of the present invention a "support material" is a material which "supports" the catalytic substance offering a substrate (optionally with a special structure and chemical behavior) on which the catalytic substance can be deposited.

### Catalytic substances

### Purpose of catalytic substances

The purposes of the catalytic substances are as follows:

1. The catalysis of the reaction between organic sulfur compounds, preferably mercaptans, and hydrogen to form $H_2S$ and hydrocarbon byproducts.

2. The catalysis of the reaction between $H_2S$ and oxygen to form elemental sulfur and water.

### Composition of catalytic substances

Catalyst systems according to the present invention comprise a single catalytic substance.

In these catalyst systems a second and any further catalytic substances are preferably present only as impurities in an amount of not more than 1% by weight, more preferably not more than 0,1 % by weight and most preferred not more than 0,01 % based on the weight of the first catalytic substance.

In the present invention metals or metal compounds are used as catalytic substances.

In preferred embodiments of the invention metal oxides and metal sulfides are the preferred substances used as catalytic substances among the metal compounds.

The most preferred metals applied as catalytic substances in the present invention belong to the group consisting of W, Co, Mo, Ni, Mn, V, Cd, or Na.

In a particularly preferred embodiment of the invention a catalytic substance is W in elemental form or in form of its oxides or sulfides.

In another preferred embodiment of the invention a catalytic substance is elemental Co or cobalt oxides or sulfides.

In another preferred embodiment of the invention a catalytic substance is elemental Mo or its oxides or sulfides.

In another preferred embodiment of the invention a catalytic substance is Ni in elemental form or in form of its oxides or sulfides.

In another preferred embodiment of the invention a catalytic substance is Mn in elemental form or in form of its oxides or sulfides.

In another preferred embodiment of the invention a catalytic substance is V in elemental form or in form of its oxides or sulfides.

In another preferred embodiment of the invention a catalytic substance is Cd in elemental form or in form of its oxides or sulfides.

In another preferred embodiment of the invention a catalytic substance is Na in elemental form or in form of its oxides or sulfides.

Most preferred catalytic substances in the context of the present invention are metals belonging to the group consisting of W, Co, or Mo as well as their oxides or sulfides.

In preferred embodiments of the invention the catalytic substances are deposited on the support material in an amount of at least 0.05% by weight, particularly preferred at least 0.07% by weight and most preferred at least 0.1% by weight based on the total weight of the catalyst system. In other preferred embodiments of the invention the catalytic substances are deposited on the support material in an amount of at least 0.5% by weight, particularly preferred at least 0.7% by weight and most preferred at least 1% by weight based on the total weight of the catalyst system. Preferably the amount of the catalytic substances in the catalyst system is not more than 6.5% by weight, particularly preferred not more than 6% by weight and most preferred not more than 5% by weight based on the total weight of the catalyst system. In another preferred embodiment of the invention the amount of the catalytic substances in the catalyst system is not more than 9% by weight, more preferably not more than 8% by weight and most preferred not more than 7% by weight based on the total weight of the catalyst system.

In a special embodiment of the invention the catalytic substance is present in an amount of from 0.1 to 5% by weight based on the total amount of the catalyst system, when the catalytic substance is an elemental metal.

In another special embodiment of the invention the catalytic substance is present in an amount of from 1 to 7% by weight based on the total amount of the catalyst system, when the catalytic substance is a metal sulfide or a metal oxide.

## Support material

### Purpose of the support material

The support material has the purpose to provide a substrate on which the catalytic substances are spread, enabling the catalytic substances to form a surface which is as expanded as possible.

### Composition of the support material

To obtain this, a nano-structured support material is used, which acts as a nano-reactor.

This nano-structured support material consists of carbon material.

In a preferred embodiment of the invention the support material consists of carbon nano-tubes.

In another preferred embodiment of the invention the support material consists of carbon nano-fibers.

Alternatively also nano-porous carbon can be used as support material.

The nano-structured support material either can be unmodified or modified when being used as support material.

In a preferred embodiment of the invention the nano-structured support material is modified before being used as support material.

In a most preferred embodiment of the invention the nano-structured support material is modified by grafting of functional groups thereon.

## Carbon nano-tubes

### SWNTs, DWNTs, and MWNTs

Catalyst systems based on carbon nano-tubes as support material possess the advantage of showing low surface tension with water, which accelerates the movement of the water thereon, either inside or outside the tubes, facilitating the removal of solid sulfur particles formed in the tubes or on their surfaces during the conversion reaction.

The carbon nano-tubes can consist of single wall carbon nano-tubes, so-called SWNTs, double wall carbon nano-tubes, so-called DWNTs and multi wall carbon nano-tubes, so- called MWNTs. Preferably all the three kinds of carbon nano-tubes have tube lengths in the micrometer range.

In a preferred embodiment of the invention the lengths of the nano-tubes are not less than 100 nm, preferably not less than 500 nm and most preferred not less than 1 $\mu$m.

On the other hand the lengths of the nano-tubes should not exceed the value of 200 $\mu$m, preferably 150 $\mu$m and most preferred 100 $\mu$m.

### SWNTs

In a preferred embodiment of the invention the applied SWNTs have surface areas of at least 300 $m^2$/g, preferably at least 400 $m^2$/g, and most preferred at least 500 $m^2$/g.

In another preferred embodiment the applied SWNTs have surface areas of not more than 1700 $m^2$/g, preferably not more than 1600 $m^2$/g, and most preferred not more than 1500 $m^2$/g.

These SWNTs preferably have an average diameter of at least 0.5 nm, particularly preferred at least 0.75 nm and most preferred at least 1.0 nm. Preferably the diameter does not exceed the value of 6 nm, particularly preferred 5 nm and most preferred 4 nm.

The pore volume of the applied SWNTs is preferably at least 0.1 $cm^3$/g, particularly preferred at least 0.15 $cm^3$/g and most preferred at least 0.2 $cm^3$/g. The pore volume preferably does not exceed the value of 1.4 $cm^3$/g, particularly preferred it does not exceed a value of 1.3 $cm^3$/g and most preferred it does not exceed a value of 1.2 $cm^3$/g.

**DWNTs**

In a second preferred embodiment of the invention DWNTs are used alternatively to the SWNTs as support material for the catalytic substances.

In this embodiment the applied DWNTs have surface areas of at least 200 $m^2/g$, preferably at least 300 $m^2/g$, and most preferred at least 400 $m^2/g$.

In another preferred embodiment of the invention the applied DWNTs have surface areas of not more than 900 $m^2/g$, preferably, not more than 800 $m^2/g$, and most preferred not more than 700 $m^2/g$.

These DWNTs preferably have an average diameter of at least 0.75 nm, particularly preferred at least 1.0 nm and most preferred at least 2.0 nm. Preferably the diameter does not exceed the value of 7 nm, particularly preferred 6 nm and most preferred 5 nm.

The pore volume of the applied DWNTs is preferably at least 0.1 $cm^3/g$, particularly preferred at least 0.15 $cm^3/g$ and most preferred at least 0.2 $cm^3/g$. The pore volume preferably does not exceed the value of 1.4 $cm^3/g$, particularly preferred it does not exceed a value of 1.3 $cm^3/g$ and most preferred it does not exceed a value of 1.2 $cm^3/g$.

**MWNTs**

In a third preferred embodiment of the invention MWNTs are used alternatively to the SWNTs and MWNTs as support material for catalytic substances.

In this embodiment the applied MWNTs have surface areas of at least 50 $m^2/g$, preferably at least 75 $m^2/g$, and most preferred 100 $m^2/g$.

In another preferred embodiment the applied MWNTs have surface areas of not more than 700 $m^2/g$, preferably not more than 600 $m^2/g$, and most preferred not more than 500 $m^2/g$.

These MWNTs preferably have an average diameter of at least 3 nm, particularly preferred at least 4 nm and most preferred at least 5 nm. Preferably the diameter does not exceed the value of 100 nm, particularly preferred it does not exceed a value of 90 nm and most preferred it does not exceed a value of 80 nm.

The pore volume of the applied MWNTs is preferably at least 0.1 $cm^3/g$, particularly preferred at least 0.15 $cm^3/g$ and most preferred at least 0.2 $cm^3/g$. Preferably the pore volume does not exceed the value of 1.4 $cm^3/g$, particularly preferred it does not exceed a value of 1.3 $cm^3/g$ and most preferred it does not exceed a value of 1.2 $cm^3/g$.

**Carbon nano-fibers**

In a fourth preferred embodiment of the invention carbon nano-fibers are used alternatively to carbon nano-tubes as support material for the catalytic substances.

In this embodiment the applied carbon nano-fibers have surface areas of at least 50 $m^2/g$, preferably at least 75 $m^2/g$, and most preferred at least 100 $m^2/g$.

In another preferred embodiment the applied nano-fibers have surface areas of not more than 900 $m^2/g$, particularly preferred not more than 800 $m^2/g$, and most preferred not more than 700 $m^2/g$.

These nano-fibers preferably have an average diameter of at least 30 nm, particularly preferred at least 40 nm and most preferred at least 50 nm. Preferably the diameter does not exceed the value of 140 nm, particularly preferred it does not exceed the value of 120 nm and most preferred it does not exceed the value of 100 nm.

The pore volume of the applied nano-fibers is preferably at least 0.1 $cm^3/g$, particularly preferred at least 0.15 $cm^3/g$ and most preferred at least 0.2 $cm^3/g$. Preferably the pore volume does not exceed the value of 0.9 $cm^3/g$, particularly preferred it does not exceed the value of 0.8 $cm^3/g$. and most preferred it does not exceed the value of 0.7 $cm^3/g$.

Each nano-structured carbon material can be used as single component or in combination with other materials mentioned here as support material.

**Special embodiments of nano-structured support material**

In a special embodiment of the invention the nano-structured support material is preferably one or a mixture of:

(a.) single wall carbon nano-tubes with an average diameter of from 1 to 4 nm, a pore volume of from 0.2 to 1.2 $cm^3/g$, a surface area of from 500 to 1500 $m^2/g$, and tube lengths of 1 $\mu m$

(b.) double wall carbon nano-tubes with an average diameter of from 2 to 5 nm, a pore volume of from 0.2 to 1.2 $cm^3/g$, a surface area of from 400 to 700 $m^2/g$, and tube lengths of 1 $\mu m$

(c.) multi wall carbon nano-tubes with an average diameter of from 5 to 80 nm, a pore volume of from 0.2 to 1.2 $cm^3/g$, a surface area of from 100 to 500 $m^2/g$, and tube lengths of 1 $\mu m$

(d.) carbon nano-fibers with an average diameter of from 55 to 100 nm, a pore volume of from 0.2 to 0.7 $cm^3/g$, a surface area of from 100 to 700 $m^2/g$, and tube lengths of 1 $\mu m$.

**Deposition of catalytic substance on support material**

The invention also refers to a process for production of the catalyst system comprising deposition of a catalytic substance on the support material.

The catalytic substances can be deposited directly on the support material. This means in the present context that the catalytic substances, e. g. elemental metals, are deposited on the support material during a chemical reaction, where the metals are formed, e.g. during decomposition of metal salts in an aqueous solution.

Alternatively the catalytic substance can be formed first in a separate process step before it is deposited on the support material, e. g. by dispersion of both, the catalytic substances and the support material.

The catalytic substance preferably is deposited on the support material in form of nano-structures, e. g. nano-particles, nano-structured metallic clusters or in form of coatings.

Procedures for deposition of the catalytic substances on the support material are e. g. sol-gel or chemical vapor deposition, micro-emulsion or impregnation.

In preferred embodiments of the invention the catalytic substance is deposited on the support material by impregnation.

Preferred embodiments of the present invention comprise the following four process steps of depositing a catalytic substance on the support material:

**Process step 1:** Mixing catalytic substance precursors with the support material in a liquid system to obtain a mixture.

**Catalytic substance precursors**

In a preferred embodiment of the invention the catalytic substance precursors are metal compounds, preferably metal salts.

In a most preferred embodiment of the invention the catalytic substance precursor is ammonium hepta molybdate.

**Liquids for mixing catalytic substance precursors and support material**

Preferred liquid systems for the mixing of the catalytic substance precursors are aqueous systems or systems based on liquid ammonia.

In a particularly preferred embodiment of the invention the aqueous systems are solutions of water and alcohols.

In a most preferred embodiment of the invention the alcohols present in the aqueous systems are methanol and/ or iso-propanol. The alcohols are present in the aqueous solutions in an amount of from 0 to 100% by volume, preferably 20 to 70% by volume and most preferred 50% by volume.

In another most preferred embodiment of the invention the aqueous solution is additionally acidified by addition of acids, preferably by addition of hydrochloric acid.

In another preferred embodiment of the invention the ammonia based liquid systems comprise condensed ammonia.

In a most preferred embodiment of the invention the ammonia systems have a temperature range of from -90°C to -70°C when the catalytic substance precursors and the support material are mixed therein.

**Process step 2:** Heating the mixture of step 1 to temperatures of from 20 to 400°C to evaporate the liquid obtaining a catalyst system precursor.

In a preferred embodiment of the invention the liquid mixture of step 1 (comprising liquid system, catalytic substance precursors and support material) is heated up for 2 to 4 hours.

In a particularly preferred embodiment of the invention the liquid mixture is heated up to a temperature range of from 80 to 110°C to obtain the catalyst system precursor by evaporating the liquid. This step is preferably done, when the liquid system is an aqueous system.

In another preferred embodiment of the invention the mixture of step 1 is heated up to temperatures between 300 and 400°C. Preferably this step is done when the liquid system is an aqueous system.

In another preferred embodiment of the invention the mixture of step 1 is heated up to room temperature (approx. 20°C) when using ammonia based systems as liquid systems in step 1.

**Process step 3:** Calcinating the catalyst system precursor to obtain the catalyst system of the present invention.

**Calcination time**

The process time of the calcinations process is preferably between 1 and 5 hours.

**Process gases at calcination**

In a preferred embodiment of the invention the calcination of the catalyst system precursor happens in an atmosphere containing oxygen and a neutral gas. Most preferred are atmospheres consisting only of oxygen and a neutral gas. Oxygen is necessary during the calcination when a metal oxide based catalyst system should be formed.
In another preferred embodiment of the invention sulfidation of the catalyst happens after calcination, in cases when a metal sulfide based catalyst system should be formed. The sulfidation of the catalyst system precursor happens in an atmosphere containing $H_2S$ and a neutral gas..
Most preferred the gas mixture consisting of $H_2S$ and a neutral gas has atmospheric pressure.
In a preferred embodiment of the invention the GHSV in the calcination reactor has a value of from 1000 to 6000 $h^{-1}$.
Preferably the $H_2S$ concentration in the gas mixture during the calcination process is between 100 and 1000ppm.
In a preferred embodiment of the invention the formation of a metal sulfide based catalyst system proceeds during a calcination process where oxygen gas is absent in the calcination reactor.

**Calcination temperature**

In a preferred embodiment of the invention the catalyst system precursors obtained in step 2 are calcinated using a temperature ramp of 2 to 10 °C/ min. Preferably, the starting temperature is in a temperature range of from room temperature to 500°C.

**General:**

In a preferred embodiment of the invention the process temperature during calcination is at least 300°C, preferably at least 350°C, more preferably at least 400°C, particularly preferred at least 450°C and most preferred at least 600°C.
In a preferred embodiment of the invention the process temperature during calcination is not more than 350°C, preferably not more than 400°C, more preferably not more than 500°C, particularly preferred not more than 600°C and most preferred not more than 900°C.

**Formation of metal oxide based catalyst systems**

In a particularly preferred embodiment of the invention the calcination temperature has a value of between 300 and 350°C when the calcination process proceeds in presence of oxygen forming a metal oxide based catalyst system.
In most preferred embodiment of the invention the calcination temperature has a value of between 300 and 350°C when a metal oxide based catalyst system is formed and the liquid system in step 1 is a system based on liquid ammonia.
In a particularly preferred embodiment of the invention the calcination temperature has a value of between 450 and 500°C when the calcination process proceeds in presence of oxygen forming a metal oxide based catalyst system.
In a most preferred embodiment of the invention the calcination temperature has a value of between 450 and 500°C when a metal oxide based catalyst system is formed and the liquid system in step 1 is an aqueous system.

**Formation of metal sulfide based catalyst systems**

In particularly preferred embodiment of the invention the calcination temperature has a value of between 300 and 400°C when the calcination process proceeds in presence of $H_2S$ and a metal sulfide based catalyst system is formed.
In another particularly preferred embodiment of the invention the calcination temperature has a value of between 600 and 900°C when the calcination process proceeds in presence of $H_2S$ forming a metal sulfide based catalyst system.
In a most preferred embodiment of the invention the calcination temperature has a value of between 600 and 900°C when a metal sulfide based catalyst system is formed and the liquid system in step 1 is a system based on liquid ammonia.

**Process step 4: Formation of catalyst systems based on elemental metals as catalytic substances**

In preferred embodiment of the invention the oxide based catalyst systems are reduced to catalyst systems based on elemental metals as catalytic substances in presence of hydrogen in the reactor.

In a particularly preferred embodiment of the invention the reduction of oxide based catalyst systems to elemental metal based catalyst systems happens in absence of oxygen in the reactor.

In another preferred embodiment of the invention the reduction of oxide based catalyst systems to elemental metal based catalyst systems happens at a temperature range of from 500 to 650°C, preferably at a temperature range of from 580 to 650°C and most preferred at a temperature range of from 600 to 650°C.

In a most preferred embodiment of the invention elemental metal nano-particles are formed during the reduction of oxide based catalyst systems to elemental metal based catalyst systems.

In another most preferred embodiment of the invention elemental metal coatings are formed during the reduction of oxide based catalyst systems to elemental metal based catalyst systems.

However a deposition of the catalytic substance in form of elemental metal nano-particles instead of a metal coating is preferred, when using Mo as catalytic substance.

**Special embodiments of catalyst system preparation**

In a special embodiment of the invention the salts of active metal(s) (which are catalytic substance precursors) are first dissolved in 0-100%v/v methanol (or 2-prepanol) water solutions (preferably 50-50%v/v) and the solution is poured over the support material. The mixture is heated for 2-4 hours at 80-110°C and then calcinated using a temperature ramp of 2-10°C/min starting at up to 500°C in the presence of $O_2$ or a neutral gas and, if the metal should be sulfide (if desired), in the presence of 100 to 1000ppm of $H_2S$.

In case, metal nano-particles are desired to be formed on the support material, the catalyst is reduced at up to 600°C in the presence of $H_2$ gas in next step.

In case of desiring to modify the surface properties of the support material, it is first washed with a 15-40%wt solution of nitric acid for 10-24 hours, filtered and dried and washed for 10-24 hours with 15-40%wt of nitric acid for another 10-24 hours at 80-110°C while stirring, before being filtered and dried. The so-treated support material can be used according to the methods above for depositing of active metallic species.

The nano-catalyst system can be used for converting $H_2S$ to elemental sulfur in streams containing 10 to 20000ppm of $H_2S$ in the presence of $O_2$ or water vapor at temperature ranges of from 50 to 150°C and pressure ranges of from 1 to 15 bars.

The nano-catalyst system can be used for converting mercaptans to $H_2S$ in streams containing 10 to 10000ppm of mercaptans in the presence of $H_2$ or at temperatures of from 200 to 450°C and pressures of from 5 to 40 bars. The product of the stream treated this way, which contains $H_2S$, is fed to a next step as in the paragraph above to convert the $H_2S$ content thereof to elemental sulfur.

In another special embodiment of the invention the support material is functionalized before or after deposition of active metals using one of the following methods:

In a first step the metal containing support material or pure support material is refluxed with a 5/1 to 2/1 mixture of sulfuric and nitric acid. Then it is filtered and neutralized by being washed with distilled water. This way, COOH functional groups are grafted on the support material. In a second step a support material treated this way further can react with 5-15 g of urea per 0.5 g of carbon nano-tubes (CNTs) at 150°C to convert the COOH groups to amide groups. In a third step the amide groups on the support material further can react with 50 cm$^3$ of sodium perchlorate solutions per each 0.5 g of CNT for 3 times to form amine groups.

To graft OH groups on the support material, solutions of $H_2O_2$ and iron sulfate are used. The OH groups further can be converted to -O-R groups using NaOH and alkyl chloride of the desired alkyls.

A nano-catalyst system prepared this way can be used for converting $H_2S$ to elemental sulfur in streams containing 10 to 20000ppm of $H_2S$ in the presence of $O_2$ or water vapor at temperatures of from 50 to 150°C and pressures of from 1 to 15 bars.

The prepared nano-catalyst system also can be used for converting mercaptans to $H_2S$ in streams containing 10 to 10000ppm of mercaptans in the presence of $H_2$ or at temperatures of from 200 to 450°C and pressures of from 5 to 40 bars. The product of the stream treated this way, which contains $H_2S$, is fed to a next step as in the paragraph above to convert the $H_2S$ content thereof to elemental sulfur.

In another special embodiment of the invention a layer of an active metal is deposited on the support material by using the following steps:

First, a proper amount of a proper acid, preferably HCl is added to the solution of the active metal salt. Then, this solution is mixed with the support material to get to a pH of 7 where metal oxides are formed. In the next step the resulting solution is heated up to 300-400°C to remove its water content. Then, the product is optionally heated up to 600-900°C in the presence of $H_2S$ to yield a layer of active metal sulfide or in the presence of $H_2$ to form a layer of the active metal.

A catalyst system prepared this way can be used to convert $H_2S$ to elemental sulfur at $H_2S$ concentrations of from 10 to 20000ppm in the presence of $O_2$ and/or water vapor at temperature ranges of from 50 to 150°C at pressure ranges of from 1 to 15 bars. It is also able to convert mercaptans to $H_2S$ (which later is converted to elemental sulfur) at the concentration ranges of from 10 to 10000ppm, temperature ranges of from 200 to 450°C and pressure ranges of from 5 to 40 bars.

In another special embodiment of the invention the nano-structured support material is mixed with a mixture of the active metal and liquid ammonia at a temperature of -78°C. Then the mixture is warmed up to room temperature before being heated to 300-350°C in the presence of air, to form a metal oxide layer. After that, the mixture can also be heated up to temperature of from 600-900°C in the presence of $H_2S$ to convert the loaded metal to metal sulfide. Alternatively the mixture can be heated up in the presence of $H_2$ (after drying) to form a layer of the active metal.

**Modification of the support material**

In preferred embodiments of the present invention functional groups are grafted on the support material to increase the efficiency of the catalytic substance.

Preferred functional groups are functional groups of primary, secondary and tertiary amines, organic acidic groups, hydroxyl groups, ester groups, amide groups, or ether groups.

In an especially preferred embodiment of the invention primary, secondary and / or tertiary amine groups are grafted on the support material before it is used in a catalyst system according to the present invention.

**Grafting of organic acid groups**

In a preferred embodiment of the invention organic acid groups are grafted on the surface of the support materials. This can be achieved by the following process steps:

1. Refluxing the support material in absence, or preferably in presence, of the already deposited catalytic substance with a strong acid solution.
In a preferred embodiment of the invention the acid solution is an oxidizing solution.
In a particularly preferred embodiment of the invention the acid solution comprises nitric acid.
In a most preferred embodiment of the invention the concentration of nitric acid in the acid solution has a value of from 15 to 40% by weight.
In another particularly preferred embodiment of the invention the acid solution is a mixture of sulfuric and nitric acid.
In a most preferred embodiment of the invention the composition of the acid solution has a molar ratio sulfuric acid to nitric acid of from 2/1 to 5/1.
In a preferred embodiment of the invention the support material is washed with an acid solution for 10 to 24 hours.

2. Filtering and neutralizing the support material by washing it with distilled water.

3. Drying the support material.

4. In another preferred embodiment of the invention the steps 1 and 2 are repeated for several times.
In a particularly preferred embodiment of the invention the steps 1 and 2 are repeated once again.

**Grafting of amine or amide groups**

In another preferred embodiment of the invention amine or amide groups are grafted on the support materials by doing the following process steps:

1. Grafting of organic acid groups on the support material as described above.

2. Treating the support material of step 1 with urea, preferably in an amount of 5 to 15 g per 0.5 g of carbon nano-tubes.
In a preferred embodiment of the invention the treatment of the support material with urea proceeds at a temperature in the range of from 120 to 200°C, preferably 150°C. The purpose of step 2 is to convert the COOH groups on the surface of the support material further to amide groups.

3. Optionally treating the support material of step 2 additionally with 20 cm³ to 80 cm³, preferably 50 cm³, per each 0.5 g of carbon nano-tubes (CNTs) with sodium perchlorate solution for 2 to 5, preferably 3, times. The amide groups are converted this way to amine groups.

**Grafting of -OH groups or -O-R groups**

In another preferred embodiment of the invention hydroxyl groups or -O-R groups (R represents an alkyl moiety) are grafted on the surface of the support materials by doing the following process steps:

1. Treating the support material with a solution of $H_2O_2$ and iron sulfate. This treatment leads to formation of -OH groups at the surface of the support material.

2. Treating the support material of step 1 with a mixture of NaOH and alkyl chloride of desired alkyls. This treatment leads to formation of -O-R groups at the surface of the support material.

**Desulfurization process**

It is an object of the present invention to provide a process using catalyst systems as described above which enable a less technically complex but at the same time more effective removal of sulfur compounds from feed gases.
In a preferred embodiment of the present invention the desulfurization system comprises a first and a second reactor.
In a preferred embodiment of the invention the system does not comprise more than two reactors.
In special embodiments of the invention the reactors are fixed or fluidized bed reactors.
In a preferred process of the present invention a first catalyst system is used in the first reactor and a second catalyst system is used in the second reactor.
In a preferred embodiment of the invention the first catalyst system and the second catalyst system have the same composition.
In another preferred embodiment of the invention the first catalyst system and the second catalyst system have different compositions.
The desulfurization process comprises the following process steps:

1. Feeding the first reactor with a first feed gas, the first feed gas containing a gas mixture of hydrocarbons comprising mercaptans and optionally also other acid gaseous sulfur compounds.
2. Catalytic conversion of the organic sulfur compounds, preferably the mercaptans, to $H_2S$ and hydrocarbon by-products in presence of hydrogen in the first reactor.
3. Feeding the second reactor with the $H_2S$ containing gas stream leaving the first reactor and optionally also with additional gas mixtures with similar compositions containing $H_2S$.
4. Catalytic conversion of $H_2S$ to elemental sulfur and water in presence of oxygen and optionally also in presence of steam in the second reactor.
5. Elimination of elemental, preferably solid, sulfur from the second reactor by using water.

**First reactor**

According to the present invention the first reactor is fed with a first feed gas which preferably contains hydrocarbonous gases with mercaptans. Additionally hydrogen gas is introduced into the first reactor.
In a preferred embodiment of the invention the molar ratio $H_2$/ mercaptans in the first reactor preferably has a value in the range of from 1 to 10, and most preferred of from 1 to 3. The reaction taking place in the first reactor follows the equation:

$$R - SR + H_2 \xrightarrow{\text{catalyst}} H_2S + R - H \qquad \text{Eq. 3}$$

$R$ is a hydrocarbon moiety, e. g. an alkyl group.

According to the present invention the first reactor contains a first catalyst system. The catalytic substance preferably used in the first reactor is nano-structured metallic (elemental) Mo. In a particularly preferred embodiment of the invention the elemental Mo in the first reactor is deposited on the support material in form of nano-particles.

A catalyst system based on elemental molybdenum as catalytic substance is able to convert mercaptans into $H_2S$ as well as $H_2S$ into elemental sulfur. However such a catalyst system is much more effective in converting mercaptans into $H_2S$.

In a preferred embodiment of the invention the catalytic substance is present in the first reactor in an amount of at least 0.05% by weight, preferably at least 0.07% by weight and most preferred at least 0.1% by weight based on the total weight of the catalyst system in the first reactor. Particularly preferred the amount of the catalytic substance in the first reactor does not exceed a value of 7% by weight, preferably it does not exceed the value of 6% by weight and most preferred it does not exceed the value of 5% by weight based on the total weight of the catalyst system in the first reactor. The process temperature in the first reactor is preferably in the range of between 200 and 450°C and particularly preferred between 250 and 350°C.

The pressure in the first reactor is preferably in the range of between 5 and 40 bars and particularly preferred between 10 and 25 bars.

Under these conditions the system is able to convert an amount of mercaptans in a range of between 10 and 10000ppm to $H_2S$ with a yield of 99% by volume based on the total volume of gas leaving the reactor. In a special embodiment of the invention mercaptans are converted to $H_2S$ at temperature ranges between 200 and 400°C and pressures of from 5 to 40 bars in the presence of $H_2$ with a yield of at least 99%.

In another special of the invention mercaptans are converted to $H_2S$ at temperature ranges between 250 and 350°C and pressures of from 1 to 25 bars.

In the gas stream leaving the first reactor 99% of the gaseous organic sulfur compounds are already converted to $H_2S$. According to the present invention this gas stream represents the main component of a second feed gas, which can be introduced into the second reactor either alone or together with additional other gas streams. Preferably this additional gas streams are hydrocarbonous gas streams, comprising acid gases while preferably $H_2S$ is the single gaseous compound of these gas streams containing the element sulfur.

In a preferred embodiment of the invention the gas stream leaving the first reactor is recycled and mixed again with hydrogen gas. After that, it is introduced again into the first reactor with the purpose to reduce the amount of mercaptans even further.

In a special embodiment of the invention the first reactor preferably comprises catalytic systems comprising nano-structured carbon as support material loaded with nano-structured metallic molybdenum to convert a content of mercaptans of from 10 to 10000ppm in streams to $H_2S$ with a yield of over 99%.

Mostly preferred, the inlet stream of the first reactor contains between 10 and 10000ppm of mercaptans.

In a special embodiment of the invention the outlet stream of the first reactor contains 10 to 10000ppm of $H_2S$. This outlet stream is mixed with other $H_2S$ gas containing streams to reach an amount of 10 to 20000ppm $H_2S$ in the gas stream. This gas stream is guided into the second reactor after being mixed with $O_2$, air or water vapor.

**Second reactor**

According to the present invention in the second reactor $H_2S$, originating from the second feed gas which is introduced into the second reactor, is converted in presence of a second catalyst system with a yield of 99% to elemental sulfur. Water is formed during the conversion reaction as byproduct.

The process in the second reactor follows reactions as described by the reaction equations **Eq. 1** and **Eq. 2.**

Reaction partner of $H_2S$ is oxygen. In a preferred embodiment of the invention oxygen is introduced into the second reactor. In another preferred embodiment air is introduced into the second reactor.

In another preferred embodiment of the invention water vapor ("steam") is additionally introduced into the second reactor.

In a preferred embodiment of the invention the molar ratio $O_2/H_2S$ in the second reactor preferably has a value in the range of from 0.5 to 30, and most preferred of from 0.5 to 5

In a preferred embodiment of the invention the amount of water in the second feed gas in the second reactor is preferably not more than 60% by volume and most preferred in a range of between 20 and 35% by volume.

According to the present invention the second reactor contains a second catalyst system. Preferably tungsten and/ or its compounds are used as catalytic substances in the second catalyst system.

In a particularly preferred embodiment of the invention the catalytic substance in the second catalyst system comprises tungsten sulfide.

A catalyst system based on tungsten sulfide as catalytic substance is able to convert mercaptans into $H_2S$ as well as $H_2S$ into elemental sulfur. However such a catalyst system is much more effective in converting $H_2S$ into elemental sulfur.

In a preferred embodiment of the invention the catalytic substance in the second reactor is present in an amount of at least 0.5% by weight, preferably at least 0.7% by weight and most preferred at least 1% by weight based on the total weight of the catalytic system in the second reactor.

In another preferred embodiment of the invention the amount of the catalytic substance in the second reactor does not exceed a value of 9% by weight, preferably it does not exceed the value of 8% by weight and most preferred it does not exceed the value of 7% by weight based on the total weight of the catalytic system in the second reactor.

It is a big advantage of the present invention that from the second reactor, optionally elemental sulfur can continuously be eliminated together with water.

The presence of a thin film of water (produced as byproduct during the conversion reaction) on the catalyst system surface facilitates the removal of sulfur particles. This thin aqueous film further supports hydrolization of $H_2S$ to HS- facilitating the oxidation of $H_2S$ in the feed gas. This way, the need of high operating temperatures to melt the elemental sulfur with the object of removing it more easily in liquid form is eliminated. The result is not only an increase of life time of the catalyst system, but also a reduction of the negative effect of high temperatures on the CLAUS reaction equilibrium which is driven to the side of the reactants at higher temperatures due to the exothermic nature thereof. This way the demoisturizing step(s) are also merged within the process of removing elemental sulfur particles, further simplifying the process.

By washing out the elemental sulfur through the produced water the surface of the catalyst system is kept clean during the reaction and this way it is permanently ready for further reactions. This effect is due to the fact that the surface tension between the support material surface (covered with the catalytic substance) and water is low, what originates from the special nano-structure of the support material.

In a preferred embodiment of the invention in the second reactor steam is additionally introduced. The preferred process temperatures in the second reactor have values of from 50 to 150°C, most preferred they have values of from 50 to 70°C.

At presence of water vapor in the second reactor the pressure therein preferably has a value in the range of from 1 to 15 bars, most preferred it has a value of from 1 to 3 bars.

In another preferred embodiment of the invention no additional steam is introduced into the second reactor. Under these conditions the process temperature should be increased to values in the range of from 200 to 300°C preferably from 250 to 300°C so that the sulfur can be eliminated from the second reactor in molten form.

According to the present invention the second reactor is able to convert $H_2S$ to elemental sulfur from the second feed gas and mixtures thereof with an amount of $H_2S$ of from 10 to 20000ppm with a yield of above 99%.

The sweet gas leaving the second reactor is substantially free of corrosive components such as hydrogen sulfide and mercaptans.

"Substantially free" means in the context of the present invention, that the gas has an amount of corrosive sulfur components less than 1% by volume based on the total volume of gas leaving the second reactor. In a preferred embodiment of the invention the amount of corrosive sulfur components in the sweet gas is reduced even more by introducing the gas stream leaving the second reactor together with more steam and oxygen or air into the second reactor again.

In a special embodiment of the invention the outlet of the second reactor contains 0ppm of mercaptans and less than 50ppm of $H_2S$.

In a special embodiment of the invention the $O_2/H_2S$ volume ratio in the second reactor has a value of from 0.5 to 30 and the amount of water vapor in the feed gas is between 0 and 60% by volume.

Mostly preferred, the $O_2/H_2S$ volume ratio in the second reactor has a value of from 0.5 to 5 and the amount of water vapor in the feed gas is between 20 and 35% by volume.

In another special embodiment of the invention the apparatus for the desulfurization process comprises the following components:

(a.) at least two reactors in series
(b.) at least one inlet for feeding mercaptans and optionally $H_2S$ containing gas stream to the first reactor
(c.) at least one outlet for $H_2S$ containing gas streams to leave the first reactor
(d.) at least two inlets for the line leaving the first reactor for feeding other $H_2S$ containing gas streams and $O_2$ and/or water vapor to this stream
(e.) at least one inlet for the second reactor for guiding the streams resulting of step (d.) into the second reactor
(f.) at least two outlets for the second reactor to let the liquid stream containing solid sulfur particles on one hand and the pure gas stream on the other hand leaving the second reactor.
(g.) a single catalyst system in the first and in the second reactor respectively, the catalyst systems in the first reactor being able to convert mercaptans to $H_2S$ and the catalyst system in the second reactor being able to convert $H_2S$ to elemental sulfur.

An important result of the present invention is the fact that the mercaptan removal, heating, catalytic reaction, cooling, and condensation steps (the three reaction steps in **Fig. 1** together with the burner and the demoisturizing steps) are merged and hence the classical CLAUS process can be simplified from a four step process to a two step process or even a one step process.

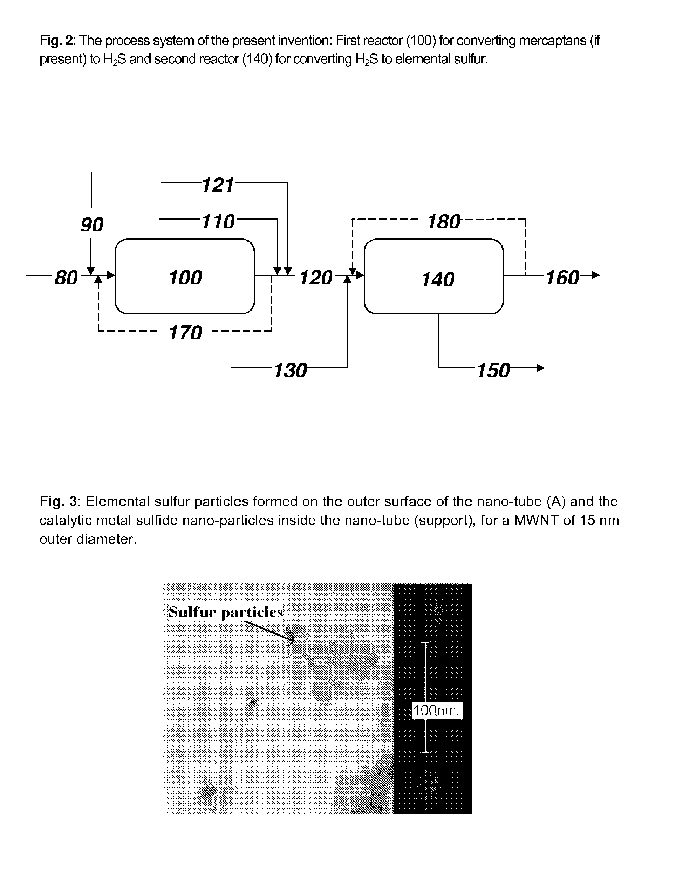

By merging the demercaptanization and the demoisturizing steps according to **Fig. 2** the elemental sulfur simply leaves the bottom of second reactor as stream.

**Examples**

The examples below are given for elaborating the subject-matter of the present invention and the invention is not limited to them.

All reactor tests were performed in a cylindrical reactor, type: ss-316, being 400 mm in length and having a diameter of 1/2 inch. The first reactor was loaded with a catalyst system comprising elemental Mo in form of nano-particles as catalytic substance. The first reactor was used for removing mercaptans at concentrations of 10 to 10000ppm from a methane helium stream with a value of from 1 to 10 for the molar ratio $H_2$/RSH and a flow rate of from 500 to 1200 ml/min with a GHSV of 1000 to 10000 $h^{-1}$. The process temperature was in a range of from 200 to 450°C and the pressure in the first reactor had a value of from 5 to 40 bars.

The second reactor was preferably loaded with a catalyst system comprising tungsten sulfide nano-particles as catalytic substance. The second reactor was used for removing $H_2S$ in a range of from 10 to 20000ppm from a methane/helium stream in the presence of $O_2$. The molar ratio $O_2$/$H_2S$ had a value in the range of from 0.5 to 30. The gas stream had a flow rate of 500 to 1200 ml/min with a GHSV of 1000 to 10000 $h^{-1}$. The process temperature in the second reactor had a value of from 50 to 150°C and the pressure in the second reactor had a value of from 1 to 15 bars. For safety purposes the outlet of the process was blown through on NaOH or iron-chelate solution, when no measurements were done.

All gas flows were controlled using flow meters and the gas streams were mixed in a static mixer before being fed to the reactor. The water vapor was generated using an electrical tracing system and the flow rate was adjusted using a dosing pump. The reaction outlet was sent to a stream trap for removing the water content for analysis purposes. The $H_2S$ content was analyzed using gas chromatographs equipped with thermal conductivity reactors (TCD) or sulfur chemiluminesence detectors (SCD). Alternative UOP163 and UOP212 methods were also used.

Structure characterizations were performed using Raman, scanning electron microscopy (SEM), accelerated surface area and porosimetry (ASAP), BET, high resolution tunneling electron microscopy (HRTEM), X-ray diffraction and inductively coupled plasma spectrometry (ICP).

**Example 1: Tungsten sulfide on MWNTs**

A nano catalyst system containing 5% by weight of tungsten sulfide was prepared by dissolving ammonium meta tungstate in a 50v/50v water/ethanol solution and mixing it with carbon MWNTs with a diameter of 0.15 to 0.18 mm. The resulting mixture was dried at 110°C for 2 hours before being calcinated in two steps. The first calcination step included heating of the sample to 200°C from room temperature with a slope of 2°C/min and staying at 200°C for half an hour in the presence of He and $O_2$. The next step constituted heating the sample from 200°C to 500°C with the same temperature time step and staying there for another half of an hour. From 350°C, $O_2$ stream was cut. After the calcination was finished a mixture of 0.5% by volume of $H_2S$ and 99.5% by volume of He was passed over the catalyst for 2 hours to convert the tungsten oxide to sulfide thereof at 330°C.

The catalyst system was then used to remove the $H_2S$ content of a stream comprising 5500ppm of $H_2S$, and 20% v/v water vapor and methane/helium at $O_2$/$H_2S$=2. The GHSV had a value of 5000 $h^{-1}$, the process temperature was 65°C while the reactor had atmospheric pressure. The process time was 8 hours. In the outlet of the reactor there was found a $H_2S$ content of 20ppm.

**Example 2: Comparison of catalyst system from example 1 with the commercial CLAUS catalyst system**

A commercial CLAUS catalyst comprising over 93.8% by weight of $Al_2O_3$, less than 3.5% by weight of $TiO_2$ and less than 2500ppm of $Na_2O$ with a support porosity of 20 $cm^3$/100 g and a surface area of 300 to 400 $m^2$/g was used to remove $H_2S$ from a feed gas mixture containing 4500ppm $H_2S$, and 20% v/v water vapor and methane/helium at $O_2$/$H_2S$=2. The GHSV had a value of 5000 $h^{-1}$. Process temperature was 65°C while the reactor had atmospheric pressure. After 20 minutes the content of the reactor was found to have 3000ppm of $H_2S$, which revealed that the commercial catalyst was incapable of working in the presence of $H_2O$ at the present operating conditions.

**Example 3: Using the catalyst system of the present invention at CLAUS process operating conditions**

A catalyst system comprising 3% by weight of tungsten sulfide on support material consisting of carbon MWNTs was used to remove the $H_2S$ content of a stream containing 8500ppm $H_2S$, and methane/ helium at $O_2/H_2S=2$. The GHSV had a value of 8000 $h^{-1}$. The process temperature was 200°C and the reactor had atmospheric pressure. After 20 hours the outlet was found to contain less than 10ppm of $H_2S$. The catalyst system was also found to function well at temperatures below the conventional temperature of the CLAUS process and in absence of water vapor.

**Example 4: Reduction of the catalyst system**

A catalyst system identical to that of example 3 was used to remove the $H_2S$ content of a stream containing 8000ppm of $H_2S$, and 5% v/v water vapor and methane/helium at $O_2/H_2S=5$. The GHSV had a value of 4500 $h^{-1}$. The process temperature was 70°C, while the reactor had atmospheric pressure. After 10 hours the feed was found to contain 250ppm of $H_2S$. After adding 20%v/v of water vapor and continuing the reaction for additional 2 hours the $H_2S$ content in the gas had a value of 30ppm in the outlet. This was attributed to the cleaning of the catalyst surface of elemental sulfur by the addition of water which improves the yield.

**Example 5: SWNT based catalysts**

A catalyst system comprising 3%wt tungsten sulfide on carbon SWNTs was used to remove the $H_2S$ content of a stream containing 4500ppm $H_2S$, and 20% v/v water vapor and methane/helium at $O_2/H_2S=2$. The GHSV had a value of 4500 $h^{-1}$. The process temperature was 65°C and the reactor had atmospheric pressure. After 6 hours reacting time the outlet was found to contain 450ppm of $H_2S$. This was attributed to the less diameter of SWNT which hinders the diffusion of water into the tubes, making it difficult for the water to wash out the elemental sulfur and consequently reducing the yield.

**Example 6: Modification of the catalyst performance**

Carbon MWNT samples were washed with 30%wt solutions of nitric acid, filtered and dried. Tungsten sulfide was deposited on the support material using impregnation technique. The probes were examined by ICP analysis. A better metal distribution could be observed which showed a metal content of 3.6%wt. This value reveals an increase of 0.6%wt as to the case of unmodified support material.
The catalyst was next applied to remove the $H_2S$ content of a gas stream containing 10000ppm of $H_2S$ and 20% v/v water vapor and methane/helium at $O_2/H_2S=2$, The GHSV had a value of 5000 $h^{-1}$. The process temperature was 65°C while the reaction zone had atmospheric pressure. After 10 hours the output was found to contain 50ppm of $H_2S$.

**Example 7: Bimetallic catalyst**

Ammonium hepta molybate and cobalt nitrate were used to deposit 10%wt Co + Mo based on the total amount of the catalyst system (catalytic substance Co/Mo + support material MWNTs) with a molar ratio of 3/1 on carbon MWNTs as support material. The catalyst was applied to remove the $H_2S$ content of a stream containing 4000ppm of $H_2S$, and 20% v/v water vapor and methane/helium at $O_2/H_2S=2$. The GHSV had a value of 5000 $h^{-1}$. The process temperature was 65°C.
After 2 hours, 1200ppm of $H_2S$ were observed in the outlet of the reactor, revealing the bimetallic catalysts inability for an efficiently remove of $H_2S$. The catalyst was further applied to demercaptanize iso-propylmercane to $H_2S$ in a stream comprising 3800ppm of isopropyl mercaptan and methane at $H_2/RSH=1/2$. The GHSV had a value of 4500 $h^{-1}$. The process temperature was 300°C and pressure in the reactor was 20 bars. After 7 hours the outlet was found to contain 150ppm of the mercaptan, which reveals the inability of the catalyst system for a complete conversion of the mercaptans to $H_2S$.

**Example 8: Demercaptanization using single metal catalysts**

A catalyst comprising 3%wt of Mo on MWNTs was prepared, using ammonium hepta molybdate, according to the impregnation and calcination methods of example 1. The catalytic substance was reduced in a second step at 560°C in the presence of $H_2$.
The catalyst was then applied to demercaptanize a gas stream comprising 3500ppm of isopropyl mercaptan (RSH) and methane at $H_2/RSH=1/2$. The GHSV was 4500 $h^{-1}$, the process temperature was 300°C and the pressure in the reactor had a value of 20 bars. After 14 hours the outlet of the reaction was fed to another reactor loaded with catalyst systems as described in example 6. After additional 14 hours the outlet of the second reactor was found to contain 20ppm of $H_2S$.

**Example 9: Effect of metal loading**

A catalyst system comprising 15%wt of tungsten sulfide was prepared according to the method described in example 1. The catalyst was applied to remove the $H_2S$ content of a gas stream comprising 5500ppm of $H_2S$, and 20% v/v water vapor and methane/helium at $O_2/H_2S=2$, The GHSV had a value of 5000 $h^{-1}$. The process temperature was 65°C and the reactor had atmospheric pressure. After 6 hours the outlet was found to contain 850ppm of $H_2S$. Other experiments showed that the best results could be obtained with loadings of the catalyst system with the catalytic substance of less than 5%wt based on the total amount of the catalyst system.

**Example 10: Catalysts with tungsten sulfide coatings**

A coating of tungsten sulfide in an amount of up to 3%wt based on the total weight of the catalyst system was formed on support material consisting of MWNTs by adding HCl to an aqueous solution of sodium tungstate and tungsten oxide, according to the method described in the text. The product was heated up to 350°C to remove the water content and then heated up at 750°C in the presence of a 1%v/v $H_2S$ and helium to convert the coating to a tungsten sulfide coating.
The catalyst was next applied for removing of the $H_2S$ content of a feed comprising 10000ppm $H_2S$, and 20% v/v water vapor and methane/helium at $O_2/H_2S=2$. The GHSV had a value of 6000 $h^{-1}$, the process temperature was 65°C and the reaction zone had atmospheric pressure. After 9 hours the outlet stream was found to contain 40ppm of $H_2S$.

**Example 11: Continuous removal of mercaptans and $H_2S$**

A catalyst system containing 3%wt of tungsten sulfide as described in example 8 was used to demercaptanize a gas stream comprising 9000ppm of iso-propyl mercaptan and methane at $H_2/RSH=1/2$. The GHSV had a value of 4500 $h^{-1}$, the process temperature was 300°C and the reactor had a pressure of 20 bars.
After 14 hours the outlet stream was fed to a second reactor (according to the process of the present invention) together with another gas stream already containing 7000ppm of $H_2S$, and 20% v/v water vapor and methane/helium at $O_2/H_2S=2$, In the second reactor the GHSV had a value of 6000 $h^{-1}$, the process temperature was 65°C and the reactor had atmospheric pressure. The reactor contained additionally a catalyst as described in example 6. After 8 hours, the outlet of the second reactor was found to contain 45ppm of $H_2S$.
Figure captions

| | |
|---|---|
| (10) | Feed gas consisting mainly of corrosive $H_2S$ |
| (20) | Burner (thermal section of CLAUS unit) |
| (31), (32), (33) | Catalytic reactors (catalytic section of CLAUS unit) comprising catalyst systems for catalytic conversion of sulfur compounds into elemental sulfur and non-corrosive byproducts (sweet gas) |
| (41), (42), (43) | Pre-heater for gas stream before entering the catalytic reactors |
| (50), (51), (52), (53) | Condenser for condensation of sulfur before elimination of the system |
| (60) | Tail gas |
| (70), (71), (72), (73) | Elemental sulfur leaving the process system |
| (80) | Feed gas consisting mainly of hydrocarbonous compounds comprising corrosive sulfur compounds, e. g. $H_2S$ and mercaptans |
| (90) | Hydrogen gas |
| (100) | First reactor for catalytic conversion of mercaptans into $H_2S$ and byproducts |
| (110) | Oxygen gas or air |

| (120) | Acid gas comprising mainly hydrocarbons with $H_2S$ leaving first reactor |
|---|---|
| (121) | Additional acid gas comprising mainly hydrocarbons with $H_2S$ to be mixed with acid gas from first reactor |
| (130) | Steam (water vapor) |
| (140) | Second reactor for catalytic conversion of $H_2S$ into elemental sulfur and $H_2O$ |
| (150) | Elemental sulfur leaving second reactor as solid phase, being washed out by liquid water |
| (160) | Sweet gas leaving second reactor |
| (170) | Recycling of acid gas leaving first reactor |
| (180) | Recycling of sweet gas leaving second reactor |

**Description of the drawings**

**Fig. 1** shows a simplified process flow of the CLAUS process (SRU).

The CLAUS unit consists of a thermal and a catalytic section.

The thermal section comprises the burner (20). Therein sulfur compounds of feed gas (10) are converted partially to $SO_2$ at elevated temperature, which reacts partially with $H_2S$ of feed gas to elemental sulfur. The gas leaving the burner is cooled up in a first condenser (50) leading to deposition of elemental sulfur (70) which is eliminated from the system.

The thermal section is followed by a catalytic section consisting of three reactors (31), (32), and (33) comprising catalyst systems which enforce decomposition of sulfur compounds into elemental sulfur.

Before entering every reactor the feed gas stream is pre-heated (41), (42), (43) to prevent deposition of elemental sulfur on the catalyst system in the reactors. After leaving each reactor the gas flow is cooled up in a condenser (51), (52), (53) leading to deposition of elemental sulfur produced during the catalytic reaction in the respective reactor. The sulfur is eliminated from the system in liquid form (71), (72), (73).

The tail gas (60) leaving the last condenser of the catalytic section still comprises a few percent of $H_2S$. It is guided e. g. to the tail gas treating unit (TGTU), for further reduction of the amount of sulfurous components.

**Fig. 2** shows a simplified process flow of an embodiment of the present invention.

The process system comprises two reactors (100) and (140), the first reactor being the place where mercaptans being present in feed gas (80) are converted into $H_2S$ and hydrocarbonous byproducts, the second reactor being the place where $H_2S$ is converted into elemental sulfur and $H_2O$.

Feed gas (80) is introduced into the first reactor together with hydrogen gas (90).

There exist three options for the gas stream (120) leaving the first reactor:

1. It can be introduced directly into the second reactor together with oxygen or air (110) and steam (130) where its $H_2S$ component is converted directly to elemental sulfur and $H_2O$, the sulfur being eliminated of the system as solid phase by washing out with $H_2O$ (150).

2. It can be mixed with other acid gases (121) before being introduced into the second reactor.

3. It can be recycled (170) and mixed again with hydrogen gas before being introduced again into the first reactor with the purpose of further reduction of the amount of mercaptans therein.

For the gas leaving the second reactor there exist also different options:

1. It can be used directly as sweet gas (160) for further processes where such products are needed.

2. It can be recycled (180) and mixed again with steam and oxygen or air before being introduced again into the second reactor for purpose of further reduction of the amount of $H_2S$ therein.

**Claims**

1. Nano-structured catalyst system for removing mercaptans and/ or $H_2S$ from hydrocarbonous gas mixtures comprising:

(a.) a single catalytic substance, the catalytic substance being an elemental metal or a metal oxide or a metal sulfide and the metal being selected from the group consisting of Na, V, Mn, Co, Ni, Mo, Cd, W
(b.)a nano-structured support material, the support material being selected from the group consisting of single wall carbon nano-tubes, double wall carbon nano-tubes, multi wall carbon nano-tubes, nanoporous carbon, carbon nano-fibers, or mixtures thereof.

2. The nano-structured catalyst system of the preceding claim, wherein the support material consists of multi wire carbon nano-tubes with an average diameter of from 5 to 80 nm, a pore volume of from 0.2 to 1.2 $cm^3$/g, a surface area of from 100 to 500 $m^2$/g, and a tube length of approx. 1 $\mu$m.

3. The nano-structured catalyst system according to one or more of the preceding claims wherein functional groups are grafted on the support material, the functional groups belonging to the group consisting of organic acid group, hydroxyl group, primary, secondary, or tertiary amino group, amide group, alkoxyl group, ether group, ester group.

4. The nano-structured catalyst system according to one or more of the preceding claims wherein the catalytic substance is deposited on the support material in the form of nano-structured metallic clusters and/ or a coating thereof.

5. The nano-structured catalyst system according to one or more of the preceding claims wherein the catalytic substance is elemental metallic molybdenum or tungsten sulfide.

6. The nano-structured catalyst system according to one or more of the preceding claims wherein the catalytic substance is present in an amount of from 0.1 to 5% by weight based on the total amount of the catalyst system, when the catalytic substance is an elemental metal.

7. The nano-structured catalyst system according to one or more of the claims 1 to 5 wherein the catalytic substance is present in an amount of from 1 to 7% by weight based on the total amount of the catalyst system, when the catalytic substance is a metal sulfide or a metal oxide.

8. Process for removing mercaptans and $H_2S$ from gas streams using catalyst systems according to one or more of the preceding claims, the apparatus for the process comprising the following components

(a.) at least two reactors in series
(b.) at least one inlet for feeding mercaptans and optionally $H_2S$ containing gas stream to the first reactor
(c.) at least one outlet for $H_2S$ containing gas streams to leave the first reactor
(d.) at least two inlets for the line leaving the first reactor for feeding other $H_2S$ containing gas streams and $O_2$ and/or water vapor to this stream
(e.) at least one inlet for the second reactor for guiding the streams resulting of step (d.) into the second reactor
(f.) at least two outlets for the second reactor to let the liquid stream containing solid sulfur particles on one hand and the pure gas stream on the other hand leaving the second reactor
(g.) a single catalyst system in the first and in the second reactor respectively, the catalyst systems in the first reactor being able to convert mercaptans to $H_2S$ and the catalyst system in the second reactor being able to convert $H_2S$ to elemental sulfur.

9. The process of claim 8 wherein the first reactor comprises a catalytic system comprising nano-stuctured carbon as support material loaded with nano-structured metallic Mo to convert a content of mercaptans of from 10 to 10000ppm of mercaptans containing streams to $H_2S$ with a yield of over 99%.

10. The process according to the claims 8 or 9, wherein the first reactor is used to convert mercaptans to $H_2S$ at process temperatures of from 200 to 400°C, and pressures of from 5 to 40 bars in presence of $H_2$.

11. The process according to one or more of claims 8 to 10, wherein the molar ratio $H_2$/mercaptans in the first reactor has a value of from 1 to 10.

12. The process according to one or more of claims 8 to 11, wherein the inlet stream of the first reactor contains between 10 and 10000ppm of mercaptans.

13. The process of claim 8 wherein the second reactor is used to convert $H_2S$ to elemental sulfur at process temperatures of from 50 to 150°C or 50 to 70°C, and pressures of from 1 to 5 bars in presence of oxygen gas and/ or water vapor.

14. The process according to the claims 8, 9, or 13, wherein the $O_2/H_2S$ volume ratio in the second reactor has a value of from 0.5 to 30 and the amount of water vapor in the feed gas is between 0 and 60% by volume.

15. The process according to the claims 8, 9, 13, or 14, wherein the $O_2/H_2S$ volume ratio in the second reactor has a value of from 0.5 to 5 and the amount of water vapor in the feed gas is between 20 and 35% by volume.

Fig. 1: The conventional CLAUS unit (SRU)

**Fig. 2**: The process system of the present invention: First reactor (100) for converting mercaptans (if present) to $H_2S$ and second reactor (140) for converting $H_2S$ to elemental sulfur.

**Fig. 3**: Elemental sulfur particles formed on the outer surface of the nano-tube (A) and the catalytic metal sulfide nano-particles inside the nano-tube (support), for a MWNT of 15 nm outer diameter.

Europäisches
Patentamt

European
Patent Office

Office européen
des brevets

# EUROPEAN SEARCH REPORT

**Application Number**

EP 11 16 3463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/055670 A2 (HYPERION CATALYSIS INT [US]; MA JUN [US]; MOY DAVID [US]; FISCHER ALAN) 26 May 2006 (2006-05-26) | 1-3,5 | INV.<br>B01J21/18<br>B01J23/04 |
| Y | * paragraphs [0018], [0020], [0029] - [0033], [0039], [0056], [0059], [0063], [0064], [0068] - [0070], [0076], [0078], [0079], [0086] *<br>* claims * | 2 | B01J23/22<br>B01J23/34<br>B01J23/75<br>B01J23/755<br>B01J23/28<br>B01J23/30 |
| A | WO 97/32571 A1 (HYPERION CATALYSIS INT [US]; FISCHER ALAN [US]; HOCH ROBERT [US]; MOY) 12 September 1997 (1997-09-12)<br>* the whole document *<br>* claims * | 3 | B01J37/02<br>B01J35/10<br>C10G45/06<br>C10L3/10<br>C01B17/04 |
| A | US 6 203 814 B1 (FISHER ALAN [US] ET AL) 20 March 2001 (2001-03-20)<br>* the whole document *<br>* claims * | 3 | |
| X | EP 2 196 260 A1 (RES INST OF PETROLEUM INDUSTRY [IR]) 16 June 2010 (2010-06-16) | 1,4,7 | **TECHNICAL FIELDS SEARCHED (IPC)** |
| Y | * abstract *<br>* paragraphs [0001], [0017] - [0019], [0025] - [0040], [0064] * | 2 | B01J<br>C10G<br>C10L<br>C01B |
| X | WO 95/10481 A1 (DU PONT [US]) 20 April 1995 (1995-04-20)<br>* page 6, lines 3-20 *<br>* example 3 *<br>* claims * | 1,4,6 | |
| X | EP 2 045 213 A1 (MAX PLANCK GESELLSCHAFT [DE]) 8 April 2009 (2009-04-08)<br>* paragraphs [0026], [0029] - [0033], [0036] - [0040], [0052] - [0054], [0083], [0084] * | 1,3,4,6,7 | |

-/--

~~The present search report has been drawn up for all claims~~

| Place of search | Date of completion of the search | Examiner |
|---|---|---|
| Munich | 24 October 2011 | Gosselin, Daniel |

EPO FORM 1503 03.82 (P04C01)

Europäisches
Patentamt

European
Patent Office

Office européen
des brevets

# EUROPEAN SEARCH REPORT

Application Number

EP 11 16 3463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 782 885 A1 (RES INST OF PETROLEUM INDUSTRY [IR]) 9 May 2007 (2007-05-09)<br>* examples 2,6 *<br>* claims 1,5,12 *<br>----- | 1,4,6,7 | |
| X | US 2006/137817 A1 (MA JUN [US] ET AL) 29 June 2006 (2006-06-29)<br>* paragraph [0112] *<br>* tables IIa,IIb *<br>----- | 1-7 | |

TECHNICAL FIELDS
SEARCHED       (IPC)

~~The present search report has been drawn up for all claims~~

| Place of search | Date of completion of the search | Examiner |
|---|---|---|
| Munich | 24 October 2011 | Gosselin, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................................
& : member of the same patent family, corresponding
    document

EPO FORM 1503 03.82 (P04C01)

24

Europäisches
Patentamt

European
Patent Office

Office européen
des brevets

**Application Number**

EP 11 16 3463

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

EP 11 16 3463

The Search Division considers that the present European patent application does not comply with the requirements of unity of invention and relates to several inventions or groups of inventions, namely:

1. claims: 1-7

   nano-structured catalyst
   ---

2. claims: 8-15

   process for removing mercaptan characterized by the use of an apparatus
   ---

## ANNEX TO THE EUROPEAN SEARCH REPORT
## ON EUROPEAN PATENT APPLICATION NO.

EP 11 16 3463

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2011

| Patent document cited in search report | | Publication date | Patent family member(s) | | Publication date |
|---|---|---|---|---|---|
| WO 2006055670 | A2 | 26-05-2006 | AT | 482029 T | 15-10-2010 |
| | | | AT | 497034 T | 15-02-2011 |
| | | | CA | 2588109 A1 | 26-05-2006 |
| | | | CA | 2588124 A1 | 08-06-2006 |
| | | | CN | 101098991 A | 02-01-2008 |
| | | | CN | 101103144 A | 09-01-2008 |
| | | | DK | 1828447 T3 | 21-03-2011 |
| | | | DK | 1831440 T3 | 08-11-2010 |
| | | | EP | 1828447 A2 | 05-09-2007 |
| | | | EP | 1831440 A2 | 12-09-2007 |
| | | | JP | 2008520413 A | 19-06-2008 |
| | | | JP | 2008520414 A | 19-06-2008 |
| | | | WO | 2006055670 A2 | 26-05-2006 |
| | | | WO | 2006060168 A2 | 08-06-2006 |
| WO 9732571 | A1 | 12-09-1997 | AU | 724277 B2 | 14-09-2000 |
| | | | AU | 2197997 A | 22-09-1997 |
| | | | BR | 9707845 A | 27-07-1999 |
| | | | CA | 2247820 A1 | 12-09-1997 |
| | | | CN | 1217653 A | 26-05-1999 |
| | | | EP | 0910340 A1 | 28-04-1999 |
| | | | IL | 125987 A | 12-02-2003 |
| | | | JP | 2002503204 A | 29-01-2002 |
| | | | RU | 2200562 C2 | 20-03-2003 |
| | | | WO | 9732571 A1 | 12-09-1997 |
| US 6203814 | B1 | 20-03-2001 | AT | 253193 T | 15-11-2003 |
| | | | AU | 707522 B2 | 15-07-1999 |
| | | | CA | 2207282 A1 | 13-06-1996 |
| | | | DE | 69532044 D1 | 04-12-2003 |
| | | | DE | 69532044 T2 | 08-07-2004 |
| | | | EP | 0796403 A1 | 24-09-1997 |
| | | | ES | 2210324 T3 | 01-07-2004 |
| | | | JP | 4601086 B2 | 22-12-2010 |
| | | | JP | H11502494 A | 02-03-1999 |
| | | | KR | 100263027 B1 | 01-08-2000 |
| | | | US | 5866434 A | 02-02-1999 |
| | | | US | 6203814 B1 | 20-03-2001 |
| | | | WO | 9618059 A1 | 13-06-1996 |
| EP 2196260 | A1 | 16-06-2010 | CA | 2686745 A1 | 02-06-2010 |
| | | | EP | 2196260 A1 | 16-06-2010 |
| | | | US | 2010167915 A1 | 01-07-2010 |
| WO 9510481 | A1 | 20-04-1995 | NONE | | |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 11 16 3463

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2011

| Patent document cited in search report | | Publication date | Patent family member(s) | | Publication date |
|---|---|---|---|---|---|
| EP 2045213 | A1 | 08-04-2009 | EP | 2045213 A1 | 08-04-2009 |
| | | | US | 2010285354 A1 | 11-11-2010 |
| | | | WO | 2009043585 A1 | 09-04-2009 |
| EP 1782885 | A1 | 09-05-2007 | NONE | | |
| US 2006137817 | A1 | 29-06-2006 | US | 2006137817 A1 | 29-06-2006 |
| | | | US | 2008176741 A1 | 24-07-2008 |
| | | | US | 2009093360 A1 | 09-04-2009 |
| | | | US | 2011312490 A1 | 22-12-2011 |

For more details about this annex : see Official Journal of the European Patent Office, No. 12/82

**EP 2 514 524 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050123470 A1
- US 5256384 A
- US 7226572 B1